(19) **Europäisches Patentamt / European Patent Office / Office européen des brevets**

(11) **EP 1 961 162 B1**

(12) **EUROPEAN PATENT SPECIFICATION**

(45) Date of publication and mention
of the grant of the patent:
**25.08.2010 Bulletin 2010/34**

(51) Int Cl.:
*H04B 17/00* (2006.01)   *H04W 16/00* (2009.01)
*H04W 52/04* (2009.01)

(21) Application number: **06808686.7**

(22) Date of filing: **27.11.2006**

(86) International application number:
**PCT/GB2006/004424**

(87) International publication number:
**WO 2007/068879 (21.06.2007 Gazette 2007/25)**

(54) **CALL ADMISSION CONTROL IN AN AD HOC NETWORK**

ANRUF-ZUGANGSKONTROLLE IN EINEM AD-HOC-NETZ

COMMANDE D'ADMISSION D'APPEL DANS UN RESEAU AD HOC

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **15.12.2005 MY 0505918
27.04.2006 EP 06252269**

(43) Date of publication of application:
**27.08.2008 Bulletin 2008/35**

(73) Proprietor: **BRITISH TELECOMMUNICATIONS
public limited company
London
EC1A 7AJ (GB)**

(72) Inventors:
• **CHIN, Choong, Ming
52100 Kuala Lumpur (MY)**
• **SIM, Moh, Lim
47100 PUCHONG, SELANGOR (MY)**

(74) Representative: **Lau, Chi-Fai
British Telecommunications plc
Intellectual Property Department, PPC5A
BT Centre
81 Newgate Street
London EC1A 7AJ (GB)**

(56) References cited:
**US-B1- 6 519 705**

• **GRANDHI S A ET AL: "CENTRALIZED POWER
CONTROL IN CELLULAR RADIO SYSTEMS" IEEE
TRANSACTIONS ON VEHICULAR
TECHNOLOGY, IEEE SERVICE CENTER,
PISCATAWAY, NJ, US, vol. 42, no. 4, 1 November
1993 (1993-11-01), pages 466-468, XP000421220
ISSN: 0018-9545 cited in the application**
• **HOLLIDAY T ET AL: "Distributed power and
admission control for time varying wireless
networks" GLOBAL TELECOMMUNICATIONS
CONFERENCE, 2004. GLOBECOM '04. IEEE
DALLAS, TX, USA 29 NOV.-3 DEC., 2004,
PISCATAWAY, NJ, USA,IEEE, 29 November 2004
(2004-11-29), pages 768-774, XP010757633 ISBN:
0-7803-8794-5**
• **QIANG WU ET AL: "Centralized power control in
CDMA cellular mobile systems" VEHICULAR
TECHNOLOGY CONFERENCE, 1997, IEEE 47TH
PHOENIX, AZ, USA 4-7 MAY 1997, NEW YORK,
NY, USA,IEEE, US, vol. 2, 4 May 1997 (1997-05-04),
pages 1268-1271, XP010228873 ISBN:
0-7803-3659-3**

**Description**

**Field of the invention**

This invention relates to call admission control for an ad hoc network

**Background**

Ad hoc wireless networks are well known in which nodes join and leave the network over time. The nodes may for example form a Bluetooth or WiFi network although many other applicable network architectures and signal transmission protocols are known in the art. The nodes may comprise personal mobile telecommunications devices, personal digital assistants, remote sensors and many other devices. A general review of ad hoc networks is provided by T. S. Rappaport, in "Wireless Communications, Principles and Practice", Parson Education International, 2nd edition, 2002.

Ad hoc networks need not have any permanently fixed infrastructure and so network functions have to be coordinated in a distributed manner between the network nodes. Calls can be forwarded through an ad hoc network by a process known as multi-hop, over successive wireless links between adjacent nodes. Each node acts as a router and forwards call data to an adjacent node, towards its final destination. This is in contrast to conventional cellular wireless networks in which each mobile device communicates directly with a base station, which controls all transmission and routing functions.

A feature of ad hoc networks is the relationship between their power control, call admission control, network topology and routing algorithms. Each node has a finite transmission power capability and so if several calls are routed through the node, the power needs to be shared between them. If too many calls are handled by a particular node, the power available may be insufficient to provide an acceptable signal-to-interference plus noise ratio (SINR) over links between adjacent nodes. The power control and routing algorithms are configured to try to maintain an acceptable SINR for all links between the nodes of the ad hoc network.

The call admission control mechanism determines whether a new node can be admitted into the network, for example to admit a new call from a mobile device that wants to join the network. It is desirable to admit as many users as possible, whilst minimizing any reduction in SINR for existing calls due to additional co-channel interference caused by the admission of a new user. The admission decision is based on several factors including the available radio resources, available time and frequency channels, transmit power, accessibility to access points and also acceptable link quality between the nodes of the network, in terms of SINR

In early works on power control, balancing the SINRs of all radio links was proposed using a centralized control system. Reference is directed to J. M. Aein, "Power balancing in systems reemploying frequency reuse", COMSAT Tech. Rev., pp. 277 - 299, 1973. However, later works on power control proposed SINR-balancing algorithms that are distributed amongst the network nodes - see G. J. Foschini and Z. Miljanic, "A Simple Distributed Autonomous Power Control Algorithm and its Convergence", IEEE Transactions on Vehicular Technology, Vol. 42, No. 4, November 1993. Also, reference is directed to J. Zander, "Distributed Co-channel Interference Control in Cellular Radio Systems", IEEE Transactions on Vehicular Technology, Vol. 41, No. 3, pp. 305-311, August 1992.

For this so-called admission-centric approach, , the algorithms, which use either a synchronous or an asynchronous iterative approach, converge geometrically to a finite power level so that all the user links in the network will meet the required SINR threshold, provided that the network system is feasible such that all its power constraints can be satisfied. However if no feasible power assignment is possible for a given SINR threshold, the iterations of the algorithms diverge, due to the non-feasibility of the network Hence there is a need for an efficient mechanism to decide at an early stage whether a set of links can be served by nodes of the network at the same time, and whether a new link will be able to be admitted into an already feasible system. Although the distributed power control scheme is more practical than a centralized one, in a dynamic network environment such an approach may require the removal of some existing calls in order to balance the overall quality of service (QoS) requirements for the rest of the existing calls. Reference is directed to M. Andersin, Z. Rosberg and J. Zander, "Gradual removals in cellular radio networks", Wireless Networks, vol. 2, no. 1, pp. 27 - 43, (1996).

In a series of papers by Bambos *et al.* (1995, 2000), the concept of active link protection is introduced in order to minimize the degradation of SINR of currently active links whilst new links are accessing the network. See for example N. Bambos, S.C. Chen and G.J. Pottie, "Radio link admission algorithms for wireless networks with power control and active link quality protection", in Proc. IEEE INFOCOM'95, Boston, MA, (1995), and also N. Bambos, S.C. Chen and G.J. Pottie, "Channel access algorithms with active link protection for wireless communications networks with power control", IEEE/ACM Transactions on Networking 8(5), pp. 583 - 597, (2000).

For this approach, a node that seeks to form a new link to the network, first starts to transmit at low power. The transmit power for the new link is then gradually increased by a factor of $\delta > 1$ until it is successfully admitted to the system. In response to the increased interference caused by the new link, the currently active links update their powers according to standard distributed power control algorithms, but instead of satisfying the required SINR threshold they aim for an enhanced SINR threshold target which is also a multiple of $\delta > 1$. By doing so, the existing links remain active throughout the power updating process while the system negotiates whether to admit the new link or not. When new links are not able to be accommodated they then simply exit from the network without causing any drop of QoS for the existing active links. The algorithms presented by Bambos *et al.* (2000) do not assume there is any interlink communication, centralized system of computation or even admission of links one at a time. Although such an approach eliminates many assumptions based on admission-centric power control, the problem of adjusting $\delta$ adaptively when the network is either congested or not, remains unresolved. Furthermore, for new links that are being rejected by the system, the amount of time spent waiting before exiting from the system constitutes a waste of power resources and therefore generates undue interference for other active links.

A different approach has been proposed by M. Xiao, N.B. Shroff and E.K.P. Chong in "Distributed admission control for power-controlled cellular wireless systems", IEEE/ACM Transactions on Networking, vol. 9, no. 6, pp. 790 - 800, Dec. 2001. A call admission control (CAC) is proposed, based on a system parameter called a discriminant, which characterises the feasibility of admitting a new link, based on a matrix of inequality constraints for an existing, feasible network system. The node to be admitted initially operates at a constant power level for the new link whilst the method tests its admissibility to the network. One disadvantage of this approach is that it is necessary to wait until the network system settles down to make an admission decision, or it has to satisfy an upper bound interference criterion during the iterative process before being admitted. Thus, a waiting period occurs in either case, and unnecessary disturbances are made to the power levels for existing network links should the new link be eventually rejected by the network.

An admission-centric power control has been proposed in which each incoming call (considering only the uplink) first monitors pilot tones from all the active base stations in order to measure the base-to-mobile power gains, which captures the power loss of a path from the base stations to the mobile stations. See M. Andersin, Z. Rosberg and J. Zander, "Gradual removals in cellular radio networks", Wireless Networks, vol. 2, no. 1, pp. 27 - 43, (1996). For each existing mobile-to-base uplink in the channel, the algorithm assumes the receiver's thermal noise level, and the transmitter's power level is communicated to all other uplinks. On receipt of this information, all uplinks can then compute the required power levels to satisfy the SINR threshold or until the maximum power constraint of an uplink is violated, in which case the new call is rejected. Here the method assumes that only one new call is trying to be admitted at a time and that global information for an existing, feasible system can be obtained. Studies by Grandhi *et al.* (1993) show that when the information for the global link gain matrix is available i.e. the gains for all the links is known, and by neglecting the white noise factor, the maximum achievable signal-to-interference (SIR) can be determined, and provided it is greater than the threshold requirement, then there exists a feasible solution for all power constraints. Reference is directed to S.A. Grandhi, R. Vijayan, D.J. Goodman and J. Zander, "Centralized power control in cellular radio systems", IEEE Transactions on Vehicular Technology, 42(4), pp. 466 - 468, (1993) - hereinafter referred to as "Grandhi (1993).

The present invention seeks to provide call admission control for a network, wherein a prediction of the maximum achievable SIR can be made when the aforesaid global link gain information is not available.

## Summary of the invention

Broadly stated, the invention provides a method of controlling admission of a incoming node to a network in which communication takes place between nodes of the network over wireless links, comprising:

> monitoring transmissions of transmitter nodes in the network to provide location data corresponding to their respective locations;
> providing simulated location data corresponding to the locations of receiver nodes in the network that receive the transmissions over the links from respective ones of the transmitter nodes, based on the location data for the transmitter nodes;
> computing a parameter corresponding to the maximum achievable value of a signal to interference relationship for transmissions over the links in the network when including the incoming node, as a function of the location data for the transmitter nodes and the simulated data for the receiver nodes; and
> admitting the incoming node in dependence upon the value of said parameter.

The method can be performed at the incoming node, which does not need to have global information concerning all the link gains in the network

The accuracy of the simulated location data for the receiver nodes can be tested before computing said parameter corresponding to the maximum achievable value of the signal to interference relationship. This can be done by computing a test maximum achievable value of the signal to interference relationship for transmissions over the links in the network without the incoming node, as a function of the location data for the transmitter nodes and the simulated location data for the receiver nodes, and determining if the computed test maximum achievable value of the relationship is of a value that corresponds to a feasible network.

The location data corresponding to the locations of receiver nodes can be re-simulated in the event that said test maximum achievable value of the signal to interference relationship does not correspond to a feasible network

The simulated location data for the receiver nodes may be provided by postulating the location of a receiver node corresponding to each of the monitored transmitter nodes, at an essentially random location within a predetermined area surrounding the respective transmitter node. The predetermined area may correspond to a circular area centred on the respective transmitter node.

The incoming node may be admitted to the network if the computed maximum achievable value of the signal to interference relationship for transmissions over the links in the network when including the incoming node, adopts a predetermined relationship to a predetermined admittance value.

This maximum achievable value of the signal to interference relationship may be computed a plurality of times to provide a plurality of computed values thereof, so that an average of said computed values can be formed and compared with the admittance value.

According to a further aspect of the invention, there is provided a wireless node with call admission control for controlling its admission as an incoming node to a network in which communication takes place between nodes over wireless links, the wireless node including:

> monitoring means configured to monitor transmissions of transmitter nodes in the network to provide location data corresponding to their respective locations;
> receiver location simulation means to provide simulated location data corresponding to the locations of receiver nodes in the network that receive the transmissions over the links from respective ones of the transmitter nodes, based on the location data for the transmitter nodes;
> processor means to compute a parameter corresponding to the maximum achievable value of a signal to interference relationship for transmissions over the links in the network when including the incoming node, as a function of the location data for the transmitter nodes and the simulated data for the receiver nodes; and
> admittance means to admit the incoming node in dependence upon the value of said parameter.

Preferably, the node includes testing means operable to test the accuracy of the simulated location data for the receiver nodes before computing said parameter corresponding to the maximum achievable value of the signal to interference relationship. The testing means may further be operable to compute a test maximum achievable value of the signal to interference relationship for transmissions over the links in the network without the incoming node, as a function of the location data for the transmitter nodes and the simulated location data for the receiver nodes, and to determine if the computed test maximum achievable value of the relationship is of a value that corresponds to a feasible network.

The receiver location simulation means may be configured to provide re-simulated location data corresponding to the locations of receiver nodes in the event that said test maximum achievable value of the signal to interference relationship does not correspond to a feasible network

Preferably, the receiver location simulation means is configured to simulate the location of a receiver node corresponding to each of the monitored transmitter nodes, at an essentially random location within a predetermined area surrounding the respective transmitter node. The predetermined area may correspond to a circular area centred on the respective transmitter node.

Preferably, the admittance means is configured to admit the incoming node if the computed maximum achievable value of the signal to interference relationship for transmissions over the links in the network when including the incoming node, adopts a predetermined relationship to a predetermined admittance value.

The processor means may be operable to compute the maximum achievable value of the signal to interference relationship for transmissions over the links in the network when including the incoming node, a plurality of times to provide a plurality of computed values thereof, and to form a average of said computed values, and the admittance means is operable to compare said average with a said admittance value.

The node may include an antenna, beam forming circuitry for controlling the directive pattern of the antenna, a transmitter and a receiver coupled to the antenna, and a controller coupled to the antenna beam forming circuitry, the transmitter and the receiver.

Preferably, the processor means is configured to compute said parameter by:

> constructing a link gain matrix for nodes in the network with link gains computed as a function of the distance between the transmitter a receiver nodes for the respective links of the network, utilising said transmitter location data and the simulated location data for the receiver nodes, and
> deriving the value of said parameter from the link gain matrix.

## Brief description of the drawings

Features and advantages of the invention will become apparent from the following description of an embodiment thereof, given by way of illustrative example, and the accompanying drawings in which:

Figure 1 is schematic illustration of an ad hoc wireless network;
Figure 2 is a schematic block diagram of transmit/receive circuitry of a node of the network shown in Figure 1;
Figure 3 is a schematic diagram of the processes run by the controller shown in

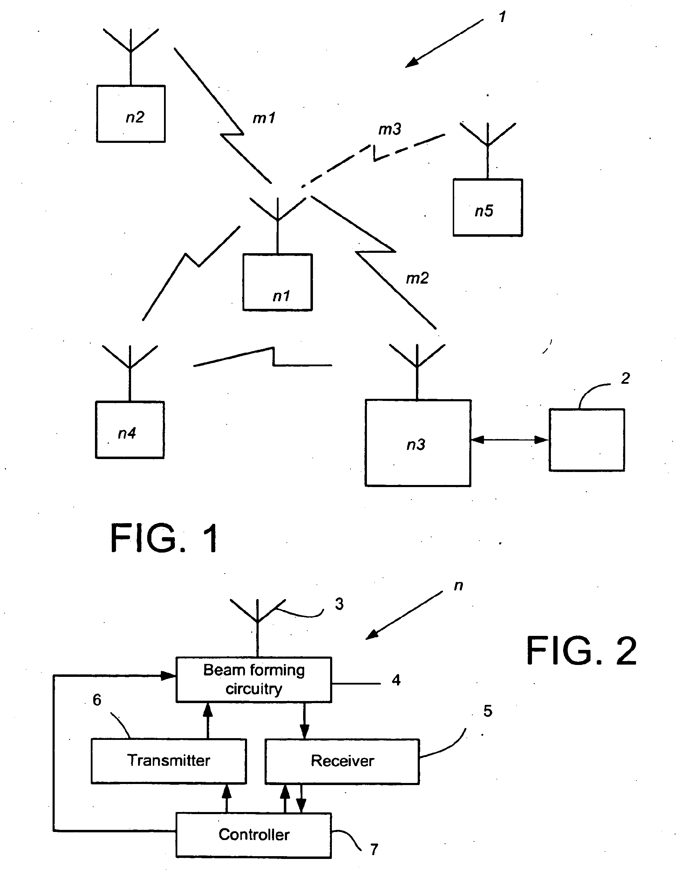

Figure 2; and

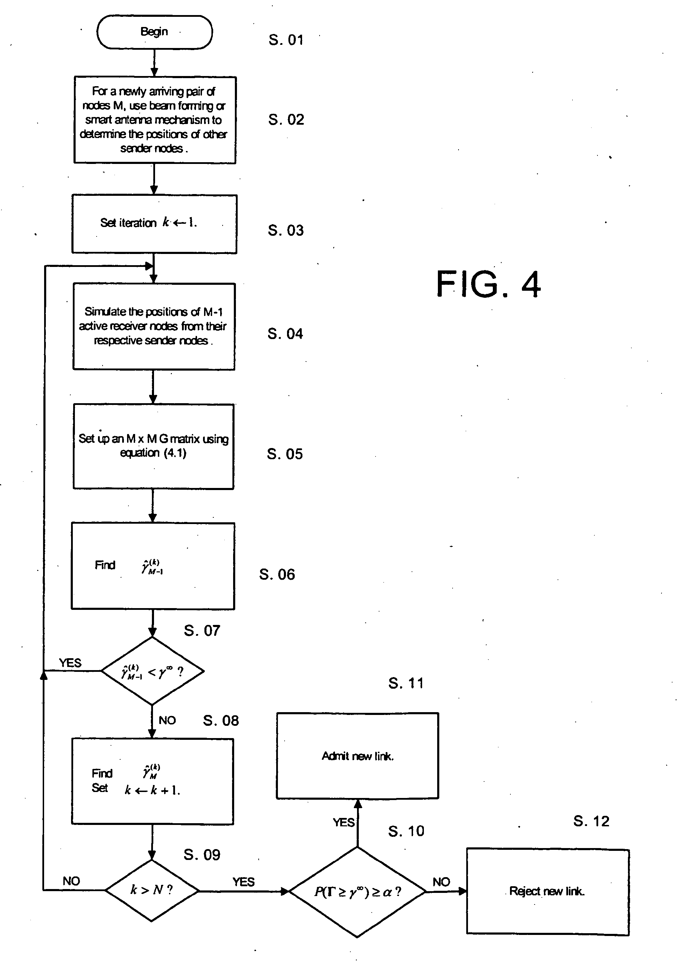

Figure 4 is a block diagram of an admission control process in accordance with the invention.

## Detailed description

*1. Network overview*

Referring to Figure 1, a wireless network 1 comprises a plurality of transmit/receive wireless nodes *n1*, *n2*, *n3*, *n4*, *n5* etc that can communicate with one another when within a transmission range determined in part by the power level P at which the transmitting node operates. In Figure 1, a transmission path for signal communication may be established between node *n2* and node *n3* as a multi-hop through the intermediary of node *n1*. The transmission paths between adjacent nodes constitute links, for which one of the nodes act as a sender node *s* and the other operates as a receiver node r. Generally, there are *M-1* links in the network 1. The links may be bidirectional to provide an uplink and a downlink between adjacent nodes *n*. Thus, communication between nodes *n2* and *n3* occurs via node *n1* through links *m1* and *m2* in Figure 1.

The network 1 is an ad hoc network in which nodes n join and leave the network over time. The nodes n may for example form a Bluetooth or WiFi network although many other applicable network architectures and signal transmission protocols will be known to those skilled in the art. The nodes may comprise personal mobile telecommunications devices, personal digital assistants, remote sensors and many other devices. In the example of Figure 1, node *n3* acts as an access point to the network, so as to allow signals to be routed into and from the network, for example through a conventional land telecommunications network 2.

Figure 2 is a schematic illustration of the network communication circuit features of one of the nodes *n,* and it will be understood the other nodes include corresponding circuitry and admission control software. The node *n* includes an antenna 3 with associated beam forming circuitry 4 that controls the orientation of the directive pattern of the antenna 3. A receiver 5 is configured to receive data signals from a downlink *m* and a transmitter 6 feeds data signals to the antenna 3 for transmission on an uplink M. The node can handle multiple data signal streams in different channels, which may be frequency and/or time delineated. The operation of the beam forming circuitry 4 and the transmitter is controlled by a controller 7.

The controller 7 includes a processor and associated memory that is operable to run a control and connection - CAC algorithm, as described in more detail hereinafter. The controller 7 also runs a power control algorithm for controlling the transmission power P of the node and the distribution of power between the various channels of the links *m* handled by the node, to achieve a satisfactory SINR for the individual links. Details of power control algorithms that are distributed, autonomous and operate using local interference measurements can be found in G.J. Foshini and Z. Miljanic, "A simple distributed autonomous power control algorithm and its convergence", IEEE Transactions on Vehicular Technology, vol 42, pp. 641 - 646, 1993. Thus, the nodes of the network each use such an algorithm to adjust their transmission power. However, a saturation point can be reached for the network, at which increasing the power P of a node n does not improve its SINR and the associated quality of service (QoS). In this situation, the network 1 becomes infeasible.

For node *n1*, the circuitry of Figure 2 acts as a transponder to receive signals from node *n2* and transmit them to node *n3,* which is outside the transmission range of *n2*. Signals are received from node *n2* by antenna 3 and passed to a receiver 5. The received signals are passed to a transmitter 6 so as to be transmitted through antenna 3 to the node *n3.*

For node *n2,* the circuitry of Figure 2 acts as a duplex head end for link *m1.*

Node *n5* in this example constitutes an incoming node that will attempt to join the network 1, by opening a link *m3* to node *n1.* This will create a total of *M* links. The feasibility of opening the link *m3* is judged by the CAC algorithm run by the controller 7 of node *n5*, as will be explained in more detail hereinafter.

When the network is in operation, the signals processed by each node n from the respective links are degraded by the signals on other links, which act as noise. Considering for example operation of node *n1*, it receives signals from *n2* and transmits them to node *n3.* The node *n1* will also receive unwanted signals from other network nodes that are within range, such as nodes *n4* and *n5* shown in Figure 1. These unwanted signals produce interference with the signal received from the node *n2* at the node *n1,* which can be measured in terms of the aforementioned SIR, or SINR if the degradation by external or internal noise such a white noise is taken into account.

*2. Basic network model*

In an ad hoc network, nodes such as *n* join and leave the network 1 over time. The following discussion considers an ad hoc network system with $M$ -1 active pairs of concurrent communications, the so-called active links, where $M > 1$. Each communication link consists of a receiver node and a sender node and without loss of generality there exists a subset of sender nodes $S=\{s_1,s_2,...,s_{M-1}\}$ transmitting packets of data to another subset of receiving nodes $R=\{r_1,r_2,...,r_{M-1}\}$. The following analysis, relates to a downlink, where a sender node $s_i$ transmits to the receiver node $r_i$. The objective of power control in such a dynamic environment is to ensure that all communication pairs achieve a SINR above a required threshold.

A situation will now be considered where a new incoming link denoted by $M$ wants join the network 1 of $M$ -1 links. For example, the node *n5* may want to be admitted to the network 1 and open link *m3* with node *n1*. In this situation, node *n5* wishes to determine the maximum achievable SIR that it would jointly achieve should it be admitted to the network.

We denote $G_{r_i s_i}$ as the gain of the communication link between the $r_i$ th receiver node and the $s_i$ th sender node

$$G_{r_i s_i} = \frac{S_{r_i s_i}}{[(x_{r_i} - x_{s_i})^2 + (y_{r_i} - y_{s_i})^2 + (z_{r_i} - z_{s_i})^2]^{\upsilon/2}} \qquad (2.0)$$

where $S_{r_i s_i}$ is the attenuation factor, $x$ , $y$ , $z$ denote the three-dimensional coordinate position in the network 1, and the subscripts $r_i$ and $s_i$ denote the receiver and sender nodes respectively. The parameter $\upsilon$ is a constant that models the propagation path loss for the link We assume that $S_{r_i s_i}$, $1 \leq i \leq M$ , are independent, log normal, identically distributed, random variables with 0 dB expectation and $\sigma^2$ log variance. The value of $\sigma$ in the range of 4-10 dB and the propagation constant $\upsilon$ in the range of 3-5 usually provide good models for urban propagation - see W. C. Y. Lee, Mobile Cellular Telecommunication Systems, McGraw Hill Publications, New York, 1989.

In general, given that there are $M$ pairs of interfering nodes in the enlarged system when the new node is admitted, we can denote the SINR of the $r_i$ th receiver node by

$$\bar{\gamma}_{r_i} = \frac{G_{r_i s_i} P_{s_i}}{\sum_{k \neq i} G_{r_i s_k} P_{s_k} + \eta_{r_i}}, 1 \leq i,k \leq M \qquad (2.1)$$

where $P_{s_i}$ is the transmit power of sender node $s_i$ and $\eta_{r_i} > 0$ is the white noise detected by node $r_i$. For each receiver node $r_i$ we assume there will be a common SINR or SIR threshold requirement denoted by $\gamma^\infty > 0$, representing the receiver node $r_i$ minimal quality of service (QoS) it must support in order to operate successfully. Following the above arguments we then have

$$\bar{\gamma}_{r_i} \geq \gamma^\infty, 1 \leq i \leq M. \qquad (2.2)$$

In matrix format, the relationships (2.1) and (2.2) can be expressed as

$$(I - F)P \geq \Theta, P > 0$$

where $\Theta = \left[ \dfrac{\gamma^{\infty}\eta_{r_1}}{G_{r_1 s_1}}, \dfrac{\gamma^{\infty}\eta_{r_2}}{G_{r_2 s_2}}, \ldots, \dfrac{\gamma^{\infty}\eta_{r_M}}{G_{r_M s_M}} \right]^{T}$, $\mathbf{P} = \left[ P_{s_1}, P_{s_2}, \ldots, P_{s_M} \right]^{T}$ and $\mathbf{F} = (F_{ij})$ is a

matrix having the entries $F_{ij} = 0$ for $i = j$ and $F_{ij} = \dfrac{\gamma^{\infty} G_{r_i s_j}}{G_{r_i s_i}}$ for $i \neq j$,

$1 \leq i, j \leq M$. It can be shown using Perron-Frobenius theorem that if the spectral radius of F lies within a unit circle of radius 1 then $(\mathbf{I} - \mathbf{F})$ is invertible and that there exists a unique solution

$$\mathbf{P}^{*} = (\mathbf{I} - \mathbf{F})^{-1}\,\Theta > 0$$

However in order to obtain the unique solution $\mathbf{P}^{*}$ global information for the link gain matrix needs to be acquired. In order to obtain this information, the gains of the individual links of the network would need to be ascertained, which in turn requires information concerning the locations of all the relevant transmitter and receiver nodes in the network. This information is not available to a node such as *n5,* when attempting to gain admission to the network 1.

*3. Converged SIR Prediction*

An alternative approach is used according to the invention to assess the matrix properties of $\mathbf{F}$, and predict the maximum achievable SIR for all the active links so that the feasibility condition (2.2) can be tested upon arrival of a new link for an incoming node to the network. By ignoring the white noise factor from the definition of SINR in equation (2.1), the SIR $\gamma_{r_i}$ of node $r_i$, can be defined as

$$\gamma_{r_i} = \frac{G_{r_i s_i} P_{s_i}}{\sum_{k \neq i} G_{r_i s_k} P_{s_k}} = \frac{P_{s_i}}{\sum_{k \neq i} \dfrac{G_{r_i s_k}}{G_{r_i s_i}} P_{s_k}} \qquad (3.1)$$

for $1 \leq i \leq M$ where $P_{s_i} > 0$ is the sender node transmit power. Note also that by comparing (2.1) and (3.1) we have the following inequality

$$\bar{\gamma}_{r_i} \leq \gamma_{r_i}, \, 1 \leq i \leq M$$

where the SIR value constitutes an upper bound criteria of SINR for all receiver nodes $r_i$.

In order to find the maximum achievable SIR common for all the links, an $M \times M$ irreducible, nonnegative

matrix $\mathbf{A} = (A_{ij})$ is constructed such that $A_{ij} = 0$ for $i = j$ and $A_{ij} = \dfrac{G_{r_i s_j}}{G_{r_i s_i}}$ for $i \neq j$, $1 \leq i, j \leq M$.

Equation (3.1) can be written as an eigensystem

$$\mathbf{A}\mathbf{P} = \Lambda\mathbf{P}$$

where

$$\text{э } \Lambda = \text{diag}\left[\frac{1}{\gamma_{r_1}}, \frac{1}{\gamma_{r_2}}, \ldots, \frac{1}{\gamma_{r_M}}\right].$$

Grandhi *et al.* (1993) *supra,* considered a matrix A comprising a $M \times M$ irreducible nonnegative matrix with eigenvalues $\left\{\lambda_{r_i}\right\}_{i=1}^{M}$.

Grandhi shows that for an eigenvalue $\lambda^* = \max\left\{|\lambda_{r_i}|\right\}_{i=1}^{M}$ with a corresponding eigenvector $\mathbf{P}^*$ having strictly positive entries, there exists a unique SIR value $\overset{\bullet}{\gamma}_M$, which is a maximum achievable or actual SIR value for all the links, which can be expressed as $\overset{\bullet}{\gamma}_M = 1/\lambda^*$ with $\mathbf{P}^*$ being the transmitter power vector to achieve $\overset{\bullet}{\gamma}_M$ in the system.

For a notional centralized power control (CPC) scheme using SIR measurements according to equation (3.1), the notional central controller can acquire knowledge of matrix A , that is, knowledge of the signal strengths in all the active links. Then, using Grandhi's approach, it would be possible to calculate the maximum achievable SIR value $\overset{\bullet}{\gamma}_M$ in all the links in the system, and also the transmitter powers $\mathbf{P}^*$ in order to attain $\overset{\bullet}{\gamma}_M$ in the network system.

However, a newly arriving node pair that wishes to form a new link $M$ with the network 1 does not have such global information concerning the positions of the nodes that make up the active links $M$-1 in the network. Thus, a newly arriving node cannot gain knowledge of the matrix A, because this requires a knowledge of the link gains G, which in turn requires knowledge of the locations of the nodes - see equations (2.0) and (2.1).

In accordance with the invention, an approximation of the true matrix A is developed by setting up a simulation of a CPC scheme. This simulation is referred to herein as a quasi-centralized power control (QCPC) scheme, and is configured to predict the actual maximum achievable SIR in the network by an algorithmic simulation. The QCPC simulation can be run by a node n seeking to be admitted to the network. If the predicted SIR value is greater than the threshold requirement, and provided the decision error made is small enough, the new link defined by the new node pair, will be admitted into the network. All the existing active links will then autonomously adjust their power levels according to some distributed power control algorithms in response to the new node.

*4. Call Admission Control Mechanism*

For a node such as node *n5* seeking admission to the network, to establish a link corresponding to link *M*, e.g. link *m3*, we make the following assumptions:

(i) The number of active links $M$ -1 can be determined by an incoming node for the new link *M*.
(ii) All the sender nodes know the positions of their surrounding co-channel sender nodes positions, that is, the 3-dimensional coordinates $(x_{S_i}, y_{S_i}, z_{S_i})$ are known for all *i*. Note that (i) and (ii) can ascertained by using beam forming techniques or utilizing smart antennas as described in more detail later. However, the locations of the receiver nodes for the active links $M$ -1 are not known by the incoming node.
(iii) The link gains between an incoming receiver node and other active sender nodes $\{G_{r_{MS_j}}\}$ for $1 \le j \le M$ , can be measured. Practically this can be achieved by requiring all the sender nodes to send a constant power pilot tone, which is a common practice in typical cellular systems.
(iv) The radio coverage of each node has a known radius $R_o$.

Based on these assumptions, the new incoming receiver node for new link *M* can measure $G_{r_{MS_j}}, j \ne M$ .
The active receiver nodes' exact locations are unknown to the new sender node (only the cumulative interference can be measured) but in accordance with the invention, the locations of the receiver nodes can be simulated by assuming each receiver node is placed isotropically i.e. essentially randomly, at a location within a sphere around its respective sender node having a common radius $R_o$ for all such nodes. The former (x,y,z) position used in equation (2.0) is thus can be approximated by means, of a uniform spatial distribution within a sphere of radius $R_o$. Based on such information, the node seeking admission to establish a new link $M$, can construct an $M \times M$ matrix $\mathbf{A} = (A_{ij})$ such that $A_{ij} = G_{r_iS_j} / G_{r_iS_i}$ > 0 for $i \neq j$ and $A_{ij} = 0$ for $i = j$. Using the approach of Grandhi $et\ al.$ (1993) $supra$, and by carrying out simulations of the positions of the active receiver nodes with respect to their sender nodes, the incoming node $n$ for the new link $M$ can decide whether or not to admit itself to the existing network.

To this end, a QCPC simulation link gain matrix $\mathbf{A}$ is defined as:

$$A_{ij}(k) = \begin{cases} \hat{G}_{r_is_j}(k)/\hat{G}_{r_is_i}(k) & i \neq j,\ i \neq M \\ G_{r_Ms_j}/G_{r_Ms_M} & i = M \\ 0 & i = j \end{cases}$$

where k is sampling integer, where $k \leq N$, and

$$\hat{G}_{r_is_i}(k) = \frac{\hat{S}_{r_is_i}}{[(\hat{x}_{r_i}(k) - x_{s_i})^2 + (\hat{y}_{r_i}(k) - y_{s_i})^2 + (\hat{z}_{r_i}(k) - z_{s_i})^2]^{\upsilon/2}} \qquad (4.1)$$

such that the co-ordinates $(\hat{x}_{r_i}(k), \hat{y}_{r_i}(k), \hat{z}_{r_i}(k))$ are randomly positioned within a sphere of radius $R_o$. For $i \neq j$, $i \neq M$ we let ln $\hat{S}_{ij} \sim N(0, \hat{\sigma}^2)$ where $\hat{\sigma} \sim U(4, 10)$.

The QCPC simulation link gain matrix can be used to predict the SIR and improve the decision making in call admission control. Without the prediction, a call would be first admitted and either it would continue to be served or denied at a later time after a waiting period. With the help of the SIR prediction, an admission decision can be made by the new node immediately upon arrival at the location of the network

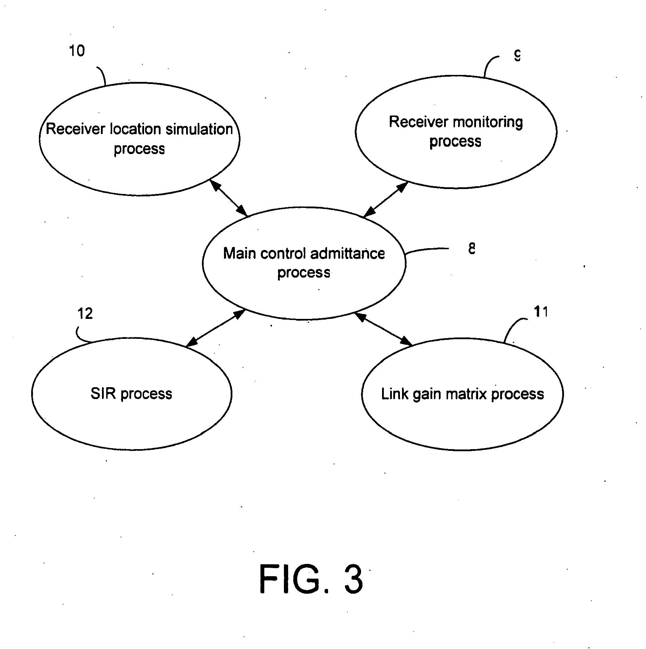

This will now be explained in more detail with reference to Figure 3 and 4 which respectively illustrate the processes run by the controller 7 shown in Figure 2 and the steps performed in the call admission control process. In this example, the control admission control system is implemented by an algorithm run by the controller 7 of the node $n5$ that seeks admission to the network.

Referring to Figure 3, the controller 7 runs a main control process 8, which controls implementation of a number of ancillary processes for use in the control admission routine. The ancillary processes include a receiver node monitoring process 9 that is responsive to data from the receiver 5 to develop location data corresponding to the locations of active receiver nodes. A receiver location data simulation process 10 simulates data corresponding to the locations of the receiver nodes using the location data and some assumptions discussed in more detail hereinafter. A link gain matrix 11 process constructs the QCPC simulation link gain matrix A of equation (4.2) using data from the processes 9, 10. A SIR process 12 computes the maximum achievable value of the SIR from the matrix developed by matrix process 11. The main process 8 compares the SIR values with a reference value to judge whether admittance of the node is feasible.

The admission procedure is illustrated in Figure 4 and starts at step S.01. A SINR threshold $\gamma^\infty$, is defined for a new link $M$ wishing to access the network (link $m3$ in this example).

At step S.01, the node $n5$ ascertains how many pairs of nodes are in operation within the network 1. To this end, the controller 7 of Figure 2 drives the beam forming circuitry 4 to locate the direction and gain $G_{r_MSj}$ of transmissions coming from individual, active nodes $n$ in the network. The resulting data is collected by the receiver 5 and fed to the controller 7. The locations of the $M$-1 transmitter nodes for the network are then calculated from this data by the controller 7.

At step S.03, the count parameter $k$ is initialised.

Then, at step S.04 the positions of the $M$-1 receiver nodes are simulated. This is carried out by simulating the possible positions of the receiver nodes, using the random distribution assumption discussed above, namely that each receiver node is situated at a location within a sphere around its respective sender node having a common radius $R_o$. As explained below, this initial random distribution is tested for accuracy, and if necessary, is updated in successive attempts until a sufficiently accurate simulation is achieved.

At step S.05 a QCPC simulation link gain matrix $\mathbf{A}$ of dimension M x M is constructed using the data corresponding to the positions of the transmitter nodes and the simulated positions for the receiver nodes of the $M$-1 links, and also the location of the nodes for link *M*. The matrix **A** is constructed according to equation (4.1).

Then at step S.06, in order to reduce the error rate, and having the knowledge of the actual positions of the *M* -1 sender nodes, the controller 7 of the incoming node calculates the maximum achievable SIR value, $\hat{\gamma}_{M-1}^{(k)}$ of the existing feasible network of *M-1* links using a reduced A matrix having dimension $(M-1) \times (M-1)$. This is carried out using the approach of Grandhi *et al.* (1993) *supra.*

It is assumed that the existing network 1 of *M-1* links is in operation and hence feasible with a SIR threshold $\gamma^\infty$. If the value of the computed maximum achievable SIR value $\hat{\gamma}_{M-1}^{(k)} < \gamma^\infty$ ,then the simulated receiver-to-sender positions for the existing feasible system involving *M* - 1 pairs of nodes is not accurate enough because the simulation indicates the network is not feasible, which is not actually the case. The accuracy of the simulation is tested at step S. 07 by determining if $\hat{\gamma}_{M-1}^{(k)} < \gamma^\infty$ in which case the process returns to step S.04 .Then an updated set of receiver node locations are postulated using the aforementioned isotropic radial model and the process steps S.04 - S.06 are repeated. This process repeats itself until a sufficiently accurate simulation of the node positions is obtained, as tested at step S.07.

When the simulation is sufficiently accurate, the maximum achievable SIR value $\hat{\gamma}_M^{(k)}$ of the expanded network of *M* links is computed at step S.08 using the M x M matrix A, by following the previously discussed approach of Grandhi *et al.* (1993) *supra.*

The parameter *k* is incremented at step S.08 and process is repeated *N* times until it is determined at step S. 09 that *k = N,* where *N* is the total number of simulated trials.

This generates a sequence Γ of predicted common SIR values involving *M* pairs of communicating nodes. A frequency analysis of these predicted values is then compared with a predetermined threshold value $\alpha \in (0,1)$ that corresponds to an acceptable probability measure for the new link *M* to join the network. In more detail:

$$\Gamma = \{ \hat{\gamma}_M^{(1)}, \hat{\gamma}_M^{(2)}, \dots, \hat{\gamma}_M^{(N)} \}$$

and by denoting $\gamma^\infty$ as the required threshold such that the new link has to attain in order to be admitted into an existing feasible system, it follows that if:

$$P(\Gamma \geq \gamma^\infty) \geq \alpha \qquad\qquad (4.2)$$

where

$$P(\Gamma \geq \gamma^\infty) = \frac{\sum_{k=1}^{N} 1_{\{\hat{\gamma}_M^{(k)} \geq \gamma^\infty\}}}{N}$$

such that

$$1_{\{\hat{\gamma}_M^{(k)} \geq \gamma^\infty\}} = \begin{cases} 1 & \text{if } \hat{\gamma}_M^{(k)} \geq \gamma^\infty \\ 0 & \text{if } \hat{\gamma}_M^{(k)} < \gamma^\infty \end{cases}$$

then the new link is then allowed to be admitted to the system. This relationship is tested at step S. 10. If true, the controller 7 instructs the transmitter 6 to open the link at step S.11, such that the transmitter 6 starts transmitting on link *m3* from node *n5* in this example. If the relationship (4.2) is not true the new link is immediately rejected in step S.11.

If the node *n5* is admitted to the network 1, the power control algorithms run by the controllers 7 of all the nodes n the support all the *M* links of the expanded network, adjust the power distribution between the links so that data can be transmitted over the newly admitted link *m3.*

Thus from the foregoing, it will be understood that the incoming node does not have any global information concerning all other link gains in the already feasible network. Instead, based on some mild assumptions on the relative location of the senders to the receiver nodes, it predicts the actual maximum achievable SIR of the network should it be admitted. In order to achieve a high probability of making accurate prediction (or low decision making error) in relation to the true SIR, a series of simulation studies is first performed to deduce the positions of other existing receiver nodes with respect to their sender nodes positions. Based on such information, for each topological scenario, it then constructs a quasi-centralized power control (QCPC) scheme and then calculates the maximum achievable SIR value. Using the SIR predictor scheme and based on some probability measures on the threshold requirements, the new node can then make an instantaneous decision on whether it should be admitted to the network. With the implementation of this scheme, the new call will cause less disturbance to existing calls as it tries to predict the maximum achievable SIR value that will be shared by all the links in the enlarged system (new and existing links). Furthermore the scheme is flexible enough to take into account how the power level updates for all existing links can be achieved, should the new call be allowed.

It is noted herein that while the above describes examples of the invention, there are several variations and modifications which may be made to the described examples without departing from the scope of the present invention as defined in the appended claims. One skilled in the art will recognise modifications to the described examples.

**Claims**

1. A method of controlling admission of an incoming node to a network in which communication takes place between nodes of the network over wireless links, the method comprising:

   monitoring transmissions of transmitter nodes in the network to provide location data corresponding to their respective locations;
   providing simulated location data corresponding to the locations of receiver nodes in the network that receive the transmissions over the links from respective ones of the transmitter nodes, based on the location data for the transmitter nodes;
   computing a parameter corresponding to the maximum achievable value of a signal to interference relationship for transmissions over the links in the network when including the incoming node, as a function of the location data for the transmitter nodes and the simulated data for the receiver nodes; and
   admitting the incoming node in dependence upon the value of said parameter.

2. A method according to claim 1 performed at the incoming node.

3. A method according to claim 1 or 2 including testing the accuracy of the simulated location data for the receiver nodes before computing the value of said parameter corresponding to said maximum achievable value of the signal to interference relationship.

4. A method according to claim 3 wherein said testing includes computing a test maximum achievable value of the signal to interference relationship for transmissions over the links in the network without the incoming node, as a function of the location data for the transmitter nodes and the simulated location data for the receiver nodes, and determining if the computed test maximum achievable value of the relationship is of a value that corresponds to a feasible network.

5. A method according to claim 4 including providing re-simulated location data corresponding to the locations of receiver nodes in the event that said test maximum achievable value of the signal to interference relationship does not correspond to a feasible network.

6. A method according to any preceding claim wherein the simulated location data is provided by postulating the location of a receiver node corresponding to each of the monitored transmitter nodes, at an essentially random location within a predetermined area surrounding the respective transmitter node.

7. A method according to claim 4 wherein said predetermined area corresponds to a circular area centred on the respective transmitter node.

8. A method according to any preceding claim including admitting the incoming node if the computed maximum achievable value of the signal to interference relationship for transmissions over the links in the network when including the incoming node, adopts a predetermined relationship to a predetermined admittance value.

9. A method according to claim 8 including computing the maximum achievable value of the signal to interference relationship for transmissions over the links in the network when including the incoming node, a plurality of times to provide a plurality of computed values thereof, forming a average of said computed values, and comparing said average with a said admittance value.

10. A method according to any preceding claim wherein said computing of said parameter includes constructing a link gain matrix for nodes in the network with link gains computed as a function of the distance between the transmitter a receiver nodes for the respective links of the network, utilising said transmitter location data and the simulated location data for the receiver nodes.

11. A method according to claim 10 including deriving the value of said parameter corresponding to the maximum achievable value of a signal to interference relationship for transmissions over the links, from the link gain matrix.

12. A wireless node with call admission control for controlling its admission as an incoming node to a network in which communication takes place between nodes over wireless links, the wireless node including:

monitoring means configured to monitor transmissions of transmitter nodes in the network to provide location data corresponding to their respective locations;
receiver location simulation means to provide simulated location data corresponding to the locations of receiver nodes in the network that receive the transmissions over the links from respective ones of the transmitter nodes, based on the location data for the transmitter nodes;
processor means to compute a parameter corresponding to the maximum achievable value of a signal to interference relationship for transmissions over the links in the network when including the incoming node, as a function of the location data for the transmitter nodes and the simulated data for the receiver nodes; and
admittance means to admit the incoming node in dependence upon the value of said parameter.

13. A computer program product comprising computer executable code which, when executed, causes a wireless node to perform the method according to any of claims 1 to 11.

**Patentansprüche**

1. Verfahren zum Kontrollieren der Zulassung eines ankommenden Knotens zu einem Netz, in dem die Kommunikation zwischen Knoten des Netzes über drahtlose Verbindungen erfolgt, mit:

Überwachen der Übertragungen von Senderknoten im Netz zur Bereitstellung von Geometriedaten, die deren jeweiligen Positionen entsprechen;
Bereitstellen simulierter Geometriedaten, die den Positionen von Empfängerknoten im Netz entsprechen, welche die Übertragungen über die Verbindungen von jeweiligen Senderknoten auf der Grundlage der Geometriedaten für die Senderknoten empfangen;
Berechnen eines Parameters, der dem maximalen erzielbaren Wert eines Störabstands für Übertragungen über die Verbindungen im Netz entspricht, wenn sie den ankommenden Knoten beinhalten, als Funktion der Geometriedaten für die Senderknoten und der simulierten Daten für die Empfängerknoten; und
Zulassen des ankommenden Knotens in Abhängigkeit vom Wert des Parameters.

2. Verfahren nach Anspruch 1, das am ankommenden Knoten durchgeführt wird.

3. Verfahren nach Anspruch 1 oder Anspruch 2, einschließlich des Prüfens der Genauigkeit der simulierten Geometriedaten für die Empfängerknoten vor dem Berechnen des Werts des Parameters, der dem maximalen erzielbaren Wert des Störabstands entspricht.

4. Verfahren nach Anspruch 3, wobei das Prüfen das Berechnen eines maximalen erzielbaren Testwerts des Störabstands für Übertragungen über die Verbindungen im Netz ohne den ankommenden Knoten als Funktion der Geometriedaten für die Senderknoten und der simulierten Geometriedaten für die Empfängerknoten sowie das Bestimmen einschließt, ob der berechnete maximale erzielbare Testwert des Abstands ein Wert ist, der einem realisierbaren Netz entspricht.

**5.** Verfahren nach Anspruch 4, einschließlich des Bereitstellens erneut simulierter Geometriedaten, die den Positionen von Empfängerknoten in dem Ereignisfall entsprechen, dass der maximale erzielbare Testwert des Störabstands keinem realisierbaren Netz entspricht.

**6.** Verfahren nach irgendeinem vorhergehenden Anspruch, wobei die simulierten Geometriedaten durch Postulieren der Position eines Empfängerknotens, der jedem der überwachten Senderknoten entspricht, an einer im Wesentlichen zufälligen Position innerhalb eines vorgegebenen Bereichs, der den jeweiligen Senderknoten umgibt, bereitgestellt werden.

**7.** Verfahren nach Anspruch 4, wobei der vorgegebene Bereich einem kreisförmigen Bereich entspricht, der auf dem jeweiligen Senderknoten zentriert ist.

**8.** Verfahren nach irgendeinem vorhergehenden Anspruch, der die Zulassung des ankommenden Knotens einschließt, wenn der berechnete maximale erreichbare Wert des Störabstands für Übertragungen über die Verbindungen im Netz, wenn sie den ankommenden Knoten einschließen, einen vorgegebenen Abstand zu einem vorgegebenen Zulassungswert übernimmt.

**9.** Verfahren nach Anspruch 8, der das Berechnen des maximalen erzielbaren Werts des Störabstands für Übertragungen über die Verbindungen im Netz, wenn sie den ankommenden Knoten einschließen, mehrere Male zur Bereitstellung mehrerer berechneter Werte derselben einschließt, wobei sie ein Mittel der berechneten Werte bildet und das Mittel mit dem Zulassungswert vergleicht.

**10.** Verfahren nach irgendeinem vorhergehenden Anspruch, wobei das Berechnen des Parameters das Konstruieren einer Verbindungs-Verstärkungsmatrix für Knoten im Netz mit Verbindungsverstärkungen einschließt, die als Funktion der Entfernung zwischen den Sender- und Empfängerknoten für die jeweiligen Verbindungen des Netzes berechnet werden, wobei die Sender-Geometriedaten und die simulierten Geometriedaten für die Empfängerknoten verwendet werden.

**11.** Verfahren nach Anspruch 10, das das Ableiten des Werts des Parameters einschließt, der dem maximalen erzielbaren Wert eines Störabstands für Übertragungen über die Verbindungen von der Verbindungs-Verstärkungsmatrix entspricht.

**12.** Drahtloser Knoten mit Anruf-Zugangskontrolle zum Kontrollieren seiner Zulassung als ankommender Knoten zu einem Netz, in dem die Kommunikation zwischen Knoten über drahtlose Verbindungen erfolgt, mit:

Überwachungseinrichtungen, die dazu konfiguriert sind, Übertragungen von Senderknoten im Netz zu überwachen, um Geometriedaten bereitzustellen, die deren jeweiligen Positionen entsprechen;
Empfängerpositions-Simulationseinrichtungen zur Bereitstellung von simulierten Geometriedaten, die den Positionen von Empfängerknoten im Netz entsprechen, welche die Übertragungen über die Verbindungen von jeweiligen Senderknoten auf der Grundlage der Geometriedaten für die Senderknoten empfangen;
Prozessoreinrichtungen zum Berechnen eines Parameters, der dem maximalen erzielbaren Wert eines Störabstands für Übertragungen über die Verbindungen im Netz entspricht, wenn sie den ankommenden Knoten einschließen, als Funktion der Geometriedaten für die Senderknoten und der simulierten Daten für die Empfängerknoten; und
Zulassungseinrichtungen zum Zulassen des ankommenden Knotens in Abhängigkeit vom Wert des Parameters.

**13.** Computerprogrammprodukt mit einem computerausführbaren Code, der, wenn er ausgeführt wird, einen drahtlosen Knoten veranlasst, das Verfahren nach irgendeinem der Ansprüche 1 bis 11 durchzuführen.

## Revendications

**1.** Procédé pour le contrôle d'admission d'un noeud entrant dans un réseau dans lequel la communication se fait entre noeuds du réseau par des liaisons sans fil, le procédé comprenant :

la surveillance des émissions de noeuds émetteurs dans le réseau afin de fournir des données de localisation correspondant à leur emplacement respectif ;

la fourniture de données de localisation simulées correspondant à l'emplacement de noeuds récepteurs dans le réseau recevant les émissions sur les liaisons à partir des noeuds respectifs parmi les noeuds émetteurs, sur la base des données de localisation pour les noeuds émetteurs ;

le calcul d'un paramètre correspondant à la valeur maximale susceptible d'être atteinte d'un rapport signal sur interférence pour des transmissions sur les liaisons dans le réseau lorsque le noeud entrant en fait partie, en fonction des données de localisation pour les noeuds émetteurs et les données simulées pour les noeuds récepteurs ; et

l'admission du noeud entrant en fonction de la valeur dudit paramètre.

2. Procédé selon la revendication 1, réalisé au niveau du noeud entrant.

3. Procédé selon la revendication 1 ou 2, comprenant le test de la précision des données de localisation simulées pour les noeuds récepteurs avant le calcul de la valeur dudit paramètre correspondant à ladite valeur maximale susceptible d'être atteinte du rapport signal sur interférence.

4. Procédé selon la revendication 3, dans lequel ledit test comprend le calcul d'une valeur maximale susceptible d'être atteinte test du rapport signal sur interférence pour les transmissions sur les liaisons du réseau en l'absence du noeud entrant, en fonction des données de localisation pour les noeuds émetteurs et les données de localisation simulées pour les noeuds récepteurs, et la détermination de si la valeur maximale susceptible d'être atteinte test du rapport est celle d'une valeur qui correspond à un réseau possible.

5. Procédé selon la revendication 4, comprenant la fourniture de données de localisation simulées de nouveau, correspondant aux emplacements de noeuds récepteurs dans le cas où ladite valeur maximale susceptible d'être atteinte test du rapport signal sur interférence ne correspond pas à un réseau possible.

6. Procédé selon l'une quelconque des revendications précédentes, dans lequel les données de localisation simulées sont fournies en supposant l'emplacement d'un noeud récepteur correspondant à chacun parmi les noeuds émetteurs sous surveillance, à un emplacement essentiellement aléatoire au sein d'une zone prédéterminée autour du noeud émetteur respectif.

7. Procédé selon la revendication 4, dans lequel ladite zone prédéterminée correspond à une zone circulaire qui est centrée sur le noeud émetteur respectif.

8. Procédé selon l'une quelconque des revendications précédentes, comprenant l'admission du noeud entrant dans le cas où la valeur maximale susceptible d'être atteinte calculée du rapport signal sur interférence pour les transmissions sur les liaisons au sein du réseau lorsque le noeud entrant en fait partie, présente une relation prédéterminée avec une valeur d'admission prédéterminée.

9. Procédé selon la revendication 8, comprenant le calcul de la valeur maximale susceptible d'être atteinte du rapport signal sur interférence pour les transmissions sur les liaisons au sein du réseau lorsque le noeud entrant en fait partie, une pluralité de fois afin de fournir une pluralité de valeurs calculées de celui-ci, la formation d'une moyenne desdites valeurs calculées, et la comparaison de ladite moyenne avec ladite valeur d'admission.

10. Procédé selon l'une quelconque des revendications précédentes dans lequel ledit calcul dudit paramètre comprend la création d'une matrice de gain de liaison pour les noeuds du réseau avec des gains de liaison calculés en fonction de la distance entre les noeuds émetteurs et récepteurs pour les liaisons respectives du réseau, en utilisant lesdites données de localisation d'émetteur ainsi que les données de localisation simulées pour les noeuds récepteurs.

11. Procédé selon la revendication 10, comprenant l'obtention de la valeur dudit paramètre correspondant à la valeur maximale susceptible d'être atteinte d'un rapport signal interférence, pour des transmissions sur les liaisons, à partir de la matrice de gain de liaison.

12. Un noeud sans fil avec contrôle d'admission d'appel pour le contrôle de son admission en tant que noeud entrant dans un réseau dans lequel la communication se fait entre noeuds par des liaisons sans fil, le noeud sans fil comprenant :

des moyens de surveillance configurés pour surveiller les émissions des noeuds émetteurs au sein du réseau afin de fournir des données de localisation correspondant à leur emplacement respectif ;

des moyens de simulation de localisation de récepteur pour fournir des données de localisation simulées correspondant aux emplacements des noeuds récepteurs dans le réseau recevant les émissions sur les liaisons à partir des noeuds respectifs parmi les noeuds émetteurs, sur la base des données de localisation pour les noeuds émetteurs ;

des moyens formant processeur pour le calcul d'un paramètre correspondant à la valeur maximale susceptible d'être atteinte d'un rapport signal sur interférence pour des transmissions sur les liaisons au sein du réseau lorsque le noeud entrant en fait partie, en fonction des données de localisation pour les noeuds émetteurs ainsi que les données simulées pour les noeuds récepteurs ; et

des moyens d'admission pour l'admission du noeud entrant en fonction de la valeur dudit paramètre.

13. Produit programme d'ordinateur comportant du code informatique exécutable qui, lors de son exécution, provoque la réalisation par un noeud sans fil du procédé selon l'une quelconque des revendications 1 à 11.

*1*

n2

*m1*

*m3*

n5

n1

*m2*

n4

n3

*2*

# FIG. 1

*3*

*n*

# FIG. 2

Beam forming
circuitry

*4*

*6*

*5*

Transmitter

Receiver

Controller

*7*

10

9

Receiver location simulation process

Receiver monitoring process

Main control admittance process

8

12

11

SIR process

Link gain matrix process

# FIG. 3

Begin
S. 01

For a newly arriving pair of nodes M, use beam forming or smart antenna mechanism to determine the positions of other sender nodes.
S. 02

Set iteration $k \leftarrow 1$.
S. 03

Simulate the positions of M-1 active receiver nodes from their respective sender nodes.
S. 04

Set up an M x M G matrix using equation (4.1)
S. 05

Find $\hat{\gamma}_{M-1}^{(k)}$
S. 06

S. 07

$\hat{\gamma}_{M-1}^{(k)} < \gamma^\infty$ ?
YES
NO

S. 08

Find $\hat{\gamma}_{M}^{(k)}$
Set $k \leftarrow k+1$.

S. 11

Admit new link.

S. 09

$k > N$ ?
NO
YES

YES
S. 10

$P(\Gamma \geq \gamma^\infty) \geq \alpha$ ?
NO

S. 12

Reject new link.

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Wireless Communications, Principles and Practice. **T. S. Rappaport.** Parson Education International. 2002
- **J. M. Aein.** Power balancing in systems reemploying frequency reuse. *COMSAT Tech. Rev.,* 1973, 277-299
- **G. J. Foschini ; Z. Miljanic.** A Simple Distributed Autonomous Power Control Algorithm and its Convergence. *IEEE Transactions on Vehicular Technology,* November 1993, vol. 42 (4
- **J. Zander.** Distributed Co-channel Interference Control in Cellular Radio Systems. *IEEE Transactions on Vehicular Technology,* August 1992, vol. 41 (3), 305-311
- **M. Andersin ; Z. Rosberg ; J. Zander.** Gradual removals in cellular radio networks. *Wireless Networks,* 1996, vol. 2 (1), 27-43
- **N. Bambos ; S.C. Chen ; G.J. Pottie.** Radio link admission algorithms for wireless networks with power control and active link quality protection. *Proc. IEEE INFOCOM'95, Boston,* 1995
- **N. Bambos ; S.C. Chen ; G.J. Pottie.** Channel access algorithms with active link protection for wireless communications networks with power control. *IEEE/ACM Transactions on Networking,* 2000, vol. 8 (5), 583-597
- **M. Xiao ; N.B. Shroff ; E.K.P. Chong.** Distributed admission control for power-controlled cellular wireless systems. *IEEE/ACM Transactions on Networking,* December 2001, vol. 9 (6), 790-800
- **S.A. Grandhi ; R. Vijayan ; D.J. Goodman ; J. Zander.** Centralized power control in cellular radio systems. *IEEE Transactions on Vehicular Technology,* 1993, vol. 42 (4), 466-468
- **G.J. Foshini ; Z. Miljanic.** A simple distributed autonomous power control algorithm and its convergence. *IEEE Transactions on Vehicular Technology,* 1993, vol. 42, 641-646
- **W. C. Y. Lee.** Mobile Cellular Telecommunication Systems. McGraw Hill, 1989